# EUROPEAN PATENT APPLICATION

(11) **EP 0 700 804 A1**
(43) Date of publication of application: **13.03.1996**
(21) Application number: 95305958.1
(22) Date of filing: 25.08.1995
(51) Int. Cl.: B60J 10/00, B60J 10/02, B60J 10/04

(54) **Textured sealing member**

(30) Priority: 08.09.1994 GB 9418081
(71) Applicant: Standard Products Limited, Huntingdon Cambridgeshire PE18 6NU (GB)
(72) Inventor: Harris, David Strachan, Peterborough, Cambridgeshire PE2 6YT (GB); Bickley, Alan Charles, Huntingdon, Cambridgeshire, PE18 8XR (GB); Keys, James Frederick, Saint Neots, Cambridgeshire PE19 3AB (GB)
(74) Representative: Jones, Michael Raymond

(57) **Abstract**

There is provided an abrasion-reducing sealing member (33) comprising an attachment portion intended, in use, to be attached to a first body and a sealing portion (18, 40) having an abutment surface (34) intended, in use, to abut a second body so as to form a seal between the first and second bodies. The abutment surface (34) comprises a plurality of ribs (36) and a plurality of grooves (38). The grooves (38) are capable of receiving abrasive particles.

## Description

This invention relates to a textured sealing member which is capable of reducing abrasion on a body against which it is to abut so as to serve as a seal. In particular, the textured sealing member of the present invention is useful in the sealing of vehicle doors and vehicle windows.

Many efforts have been made to reduce the noise generated in the sealing areas of a vehicle body when the vehicle is moving at speed. This has meant that great care has to be taken to reduce cavities where a noise can be generated and to ensure effective sealing when the vehicle is moving. In particular, the doors and vehicle body flex considerably when the vehicle is moving at high speed as a result of the pressure distribution around the vehicle and the stress generated within the vehicle structure. For example, it has been ascertained that doors may bend away from the body of a vehicle by relatively large amounts (for example 5 mm when some vehicles move at around 100 mph).

To reduce wind noise generation in such circumstances the sealing members abutting the doors of a vehicle should remain in contact with the door even when the vehicle is travelling at high speeds. To achieve this, the sealing member must be significantly compressed by the door when it is in its closed position. A typical compression of the sealing member is 6 mm when the vehicle is at rest. However, against this, as the contact forces between the seal and the door increase, the possibility of abrading the door also increases. In this respect, paint wear arises from abrasive materials in the sealing member itself or from dust trapped between the sealing member and the paint of the door. As the door vibrates relative to the vehicle body, the abrasive action is intensified and paint wear can be rapid. The abrasive properties of the sealing member can be reduced by, for example, not using abrasive fillers or by coating the sealing member with a low frictional material, for example silicone or polyurethane. However, this does not overcome the problem of trapped dust between the sealing member and, for example, the door.

Similar problems may be encountered in other situations, for example in a seal around a movable window of a car door.

According to a first aspect of the present invention, there is provided an abrasion-reducing sealing member comprising an attachment portion intended, in use, to be attached to a first body and a sealing portion having an abutment surface intended, in use, to abut a second body so as to form a seal between the first and second bodies, the abutment surface comprising a plurality of ribs and a plurality of grooves, wherein the grooves are capable of receiving abrasive particles.

Conveniently, but not necessarily, the ribs are parallel to each other. Preferably the ribs are capable of wiping abrasive particles from the second body when the sealing member is in contact with the second body.

In a preferred embodiment the sealing portion is resiliently flexible.

Preferably, the ribs protrude about 0.4 mm above the grooves, and the spacing between the centre points of adjacent ribs is preferably approximately 0.8 mm. The sealing member is preferably distorted by approximately up to 6 mm when it is in use and being sealed against the second body.

In one embodiment, at least a portion of the abutment surface is coated with friction-reducing coating, for example silicone or polyurethane. The surface from which the ribs extend may be convex.

According to a second aspect of the present invention, there is provided an abrasion-reducing sealing member comprising a body portion having an attachment portion intended, in use, to be attached to a first body, the body portion having a resiliently flexible leg member extending therefrom, the leg member having an abutment surface intended, in use, to abut a second body to form a seal between the first and second bodies, wherein the abutment surface has a plurality of ribs and a plurality of grooves, and wherein the grooves are capable of receiving abrasive particles.

In a preferred embodiment, a resiliently flexible bulbous portion may also extend from the body portion and may have an abutment surface. The bulbous portion may have a plurality of relatively high regions and a plurality of relatively low regions on its abutment surface at least.

Preferably, the leg member and bulbous portion are formed of a sponge material, and the body portion is preferably relatively rigid.

The sealing member of the second aspect of the invention may be positioned around the door surround of a vehicle body for sealing against a vehicle door when it is in its closed position. In this embodiment, the attachment portion is preferably in the form of a channel which is capable of receiving a flange of a vehicle surround. Alternatively, the sealing member may be attached to the vehicle door for sealing against the surround when it is closed.

According to a third aspect of the present invention, there is provided a panel abrasion-reducing sealing member comprising an attachment portion intended, in use, to be attached to a first body and a resiliently flexible lip portion, the lip portion having an abutment surface intended, in use, to abut a second body to form a seal between the first and second bodies, wherein the abutment surface comprises a plurality of ribs and a plurality of grooves, wherein the grooves are capable of receiving abrasive particles.

Preferably the sealing member of the third aspect of the present invention is used for sealing against a movable window pane, and may also be used, for example, for sealing against a sunroof or the like.

The ribs and grooves are positioned on the abutment surface which, in use, abuts a face of the panel when the panel is closed or partially closed. However, when the panel is open, the resiliently flexible lip portion flexes over an upper edge thereof.

According to a fourth aspect of the present invention, there is provided a vehicle having a sealing member according to any of the first, second or third aspect of the present invention.

For a better understanding of the present invention, and to show how the same may be carried into effect, reference will now be made, by way of example, to the accompanying drawings, in which:
Figure 1 shows a cross-sectional view of a sealing member according to the present invention;
Figure 2 shows a cross-sectional view of a known sealing member;
Figure 3 shows a sealing member similar to that shown in Figure 2 but modified in accordance with the present invention;
Figure 4 shows a cross-sectional view showing sealing members in use;
Figure 5 shows a cross-sectional view showing a known alternative sealing member; and
Figure 6 shows a cross-sectional view of the seal similar to that shown in Figure 5 but modified in accordance with the invention.

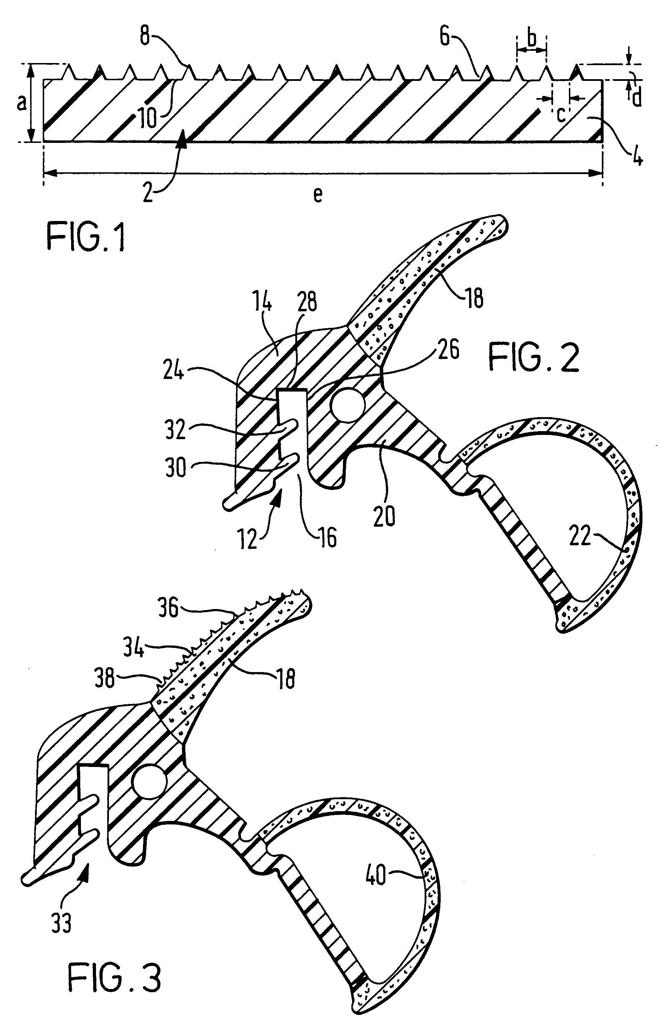

Referring to Figure 1, there is shown a sealing member shown generally at 2. The sealing member comprises a body portion 4 having an abutment surface 6, The abutment surface 6 comprises a plurality of relatively high regions in the form of ribs 8 and a plurality of relatively low regions in the form of grooves 10. In the embodiments shown the marked dimensions are as follows:
a 2.0 mm ± 0.3 mm;
b 0.8 mm ± 0.1 mm;
c 0.4 mm ± 0.1 mm;
d 0.4 mm + 0.1 mm/-0.05 mm; and
e 15.0 mm ± 1.0 mm .

Figure 2 shows a secondary seal shown generally at 12 which is known in the art. The secondary seal comprises a relatively rigid body portion 14 having a channel 16 formed therein. Extending from a corner of the body portion 14 is a sponge leg member 18. Extending from a lower region 20 of the body portion 14 is a bulbous portion 22 formed of sponge.

The channel 16 is formed of walls 24, 26 joined by a web 28. Projecting from the wall 24 are finger members 30, 32.

In use, the channel 16 is placed onto a flange of a vehicle door surround or the like and the finger members 30 and 32 provide extra securement of the sealing member 12 to the flange. Also in use leg member 18 and bulbous portion 22 flex and abut the vehicle door when in a closed position in order to form a seal.

Figure 3 shows the embodiment of Figure 2 which has been modified in accordance with the invention. In this respect, a ribbed surface 34 similar to that shown in Figure 1 is formed on an abutment surface 34 of the leg member 18. The abutment surface 34 comprises ribs 36 and grooves 38. The sealing member of Figure 3 is designated generally by the reference numeral 33. Whilst it is not shown in Figure 3, the abutment surface 40 of the bulbous portion may also be ribbed in a similar manner to the leg member 18.

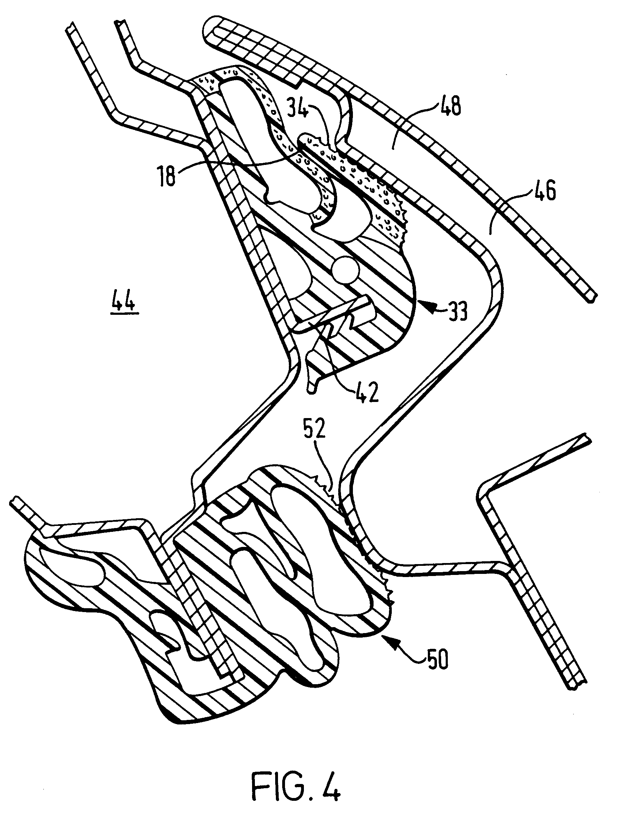

The sealing member 33 is shown in use in a vehicle door region in Figure 4. In the embodiments shown, the sealing member 33 is attached to a flange 42 of a vehicle body 44. A door 46 is shown in its closed position in which an upper portion 48 thereof abuts and flexes the leg member 18. Since the ribbed abutment surface 34 of the leg member 18 is in contact with the upper portion 48 of the door 46, any dust particles between the surface 34 and the upper portion 48 are not pushed against the paint surface of the upper portion 48 with any significant force and are received in the grooves 38 by means of the wiping action of the ribs 36. This reduction in paint wear may be further enhanced by the additional application of a coating to the surface which is to contact the vehicle door, for example silicone or polyurethane coating.

Even when the vehicle is travelling at high speed and the door 46 flexes outwards, the upper portion 48 remains in contact with the sealing member 33.

Also shown in Figure 4 is an alternative sealing member 50 in which the surface 52 to contact the door 46 when in its closed position also has a ribbed and grooved texture.

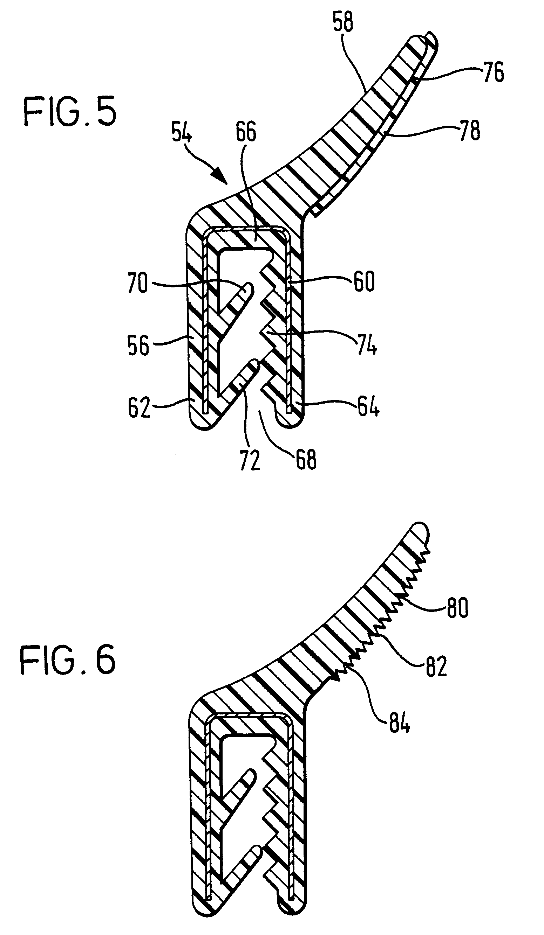

Figure 5 shows an alternative seal 54 known in the art. The seal 54 is a waistseal and comprises a body portion 56 and a lip member 58 extending therefrom. The seal 54 is formed of an EPDM elastomer which surrounds a metal reinforcing core 60. The body portion comprises two leg portions 62 and 64 joined by a web 66. The legs 62 and 64 and the web 66 form a channel 68. Fingers 70, 72 project inwardly into the channel 68 from the leg portion 62 and a plurality of projections 74 project inwardly into the channel 68 from the leg portion 64. Lip member 58 has a sealing surface 76 on which is positioned flocking material 78.

In use, the seal 54 is positioned around at least a part of a window surround of a vehicle. A flange of the window surround is inserted into the channel 68 and securement is provided by fingers 70 and 72 and projection 74. The flocking material 78 abuts a movable window when the window is in its closed position. When the window is lowered, however, the lip member 58 flexes over the upper edge of the window. Whilst a low frictional coating could be used to replace the flocking material 78, this would increase the problem of dust being trapped between the seal and the glass wearing away the glass surface and leading to a scratched glass surface.

Figure 6 shows a seal similar to that in Figure 5 which is modified in accordance with this invention. In this respect, an abutment surface 80 against which a window is to be sealed comprises ribs 82 and grooves 84 in addition, a low friction coating (not shown) may be applied to the abutment surface 80, although this is not essential. In this embodiment, the grooves 84 are able to accommodate abrasive particles which may be wiped from the movable window by ribs 82 when in use. Therefore, abrasion and scratching of the window surface is avoided.

## Claims

1. An abrasion-reducing sealing member comprising an attachment portion intended, in use, to be attached to a first body and a sealing portion having an abutment surface intended, in use, to abut a second body so as to form a seal between the first and second bodies, the abutment surface comprising a plurality of ribs and a plurality of grooves, wherein the grooves are capable of receiving abrasive particles.

2. An abrasion-reducing sealing member according to claim 1, wherein the ribs are parallel to each other.

3. An abrasion-reducing sealing member according to any preceding claim, wherein the ribs are capable of wiping abrasive particles from the second body when the sealing member is in contact with the second body.

4. An abrasion-reducing sealing member according to any preceding claim, wherein the sealing portion is resiliently flexible.

5. An abrasion-reducing sealing member according to any preceding claim, wherein the ribs protrude about 0.4 mm above the grooves, and the spacing between the centre points of adjacent ribs is about 0.8 mm.

6. An abrasion-reducing sealing member according to any preceding claim, wherein the sealing member is distorted by approximately up to 6 mm when it is in use and being sealed against the second body.

7. An abrasion-reducing sealing member according to any preceding claim, wherein at least a portion of the abutment surface is coated with a friction-reducing coating.

8. An abrasion-reducing sealing member according to claim 7, wherein the friction reducing coating is silicone or polyurethane.

9. An abrasion-reducing sealing member according to any preceding claim, wherein the surface from which the ribs extend is convex.

10. An abrasion-reducing sealing member comprising a body portion having an attachment portion intended, in use, to be attached to a first body, the body portion having a resiliently flexible leg member extending therefrom, the leg member having an abutment surface intended, in use, to abut a second body to form a seal between the first and second bodies, wherein the abutment surface has a plurality of ribs and a plurality of grooves, and wherein the grooves are capable of receiving abrasive particles.

11. An abrasion-reducing sealing member according to claim 10, wherein a resiliently flexible bulbous portion also extends from the body portion, which bulbous portion has an abutment surface.

12. An abrasion-reducing sealing member according to claim 11, wherein the bulbous portion has a plurality of relatively high regions and a plurality of relatively low regions on its abutment surface at least.

13. An abrasion-reducing sealing member according to claim 11 or 12, wherein the leg member and bulbous portion are formed of a sponge material, and the body portion is relatively rigid.

14. An abrasion-reducing sealing member according to any one of claims 10 to 13, wherein the attachment portion is in the form of a channel which is capable of receiving a flange of a vehicle door surround.

15. An abrasion-reducing sealing member according to any one of claims 10 to 13, wherein the attachment portion is in the form of a channel which is capable of receiving a flange of a vehicle door.

16. A panel abrasion-reducing sealing member comprising an attachment portion intended, in use, to be attached to a first body and a resiliently flexible lip portion, the lip portion having an abutment surface intended, in use, to abut a second body to form a seal between the first and second bodies, wherein the abutment surface comprises a plurality of ribs and a plurality of grooves, and wherein the grooves are capable of receiving abrasive particles.

17. A panel abrasion-reducing sealing member according to claim 16, which is adapted for sealing against a movable window pane.

18. A panel abrasion-reducing sealing member according to claim 16 or 17, wherein the ribs and grooves are positioned on the abutment surface which, in use, abuts a face of the panel when the panel is closed or partially closed.

19. A vehicle having a sealing member according to any preceding claim.
